# EUROPÄISCHE PATENTSCHRIFT

(11) **EP 1 099 876 B1**
(45) Veröffentlichungstag und Bekanntmachung des Hinweises auf die Patenterteilung: **12.05.2004**
(21) Anmeldenummer: 99710014.4
(22) Anmeldetag: 04.11.1999
(51) Int. Cl.: F16F 15/00

(54) **Vorrichtung zur gedämpften Lagerung eines Objekts**
Damping support for an object
Dispositif amortisseur pour supporter un objet

(43) Veröffentlichungstag der Anmeldung: 16.05.2001
(73) Patentinhaber: Deuta-Werke GmbH, 51465 Bergisch Gladbach (DE)
(72) Erfinder:
(74) Vertreter: Lippert, Hans-Joachim, Dipl.-Ing.

(56) Entgegenhaltungen:
- EP-A- 0 588 684
- EP-A- 0 764 794
- DE-A- 4 221 126
- DE-A- 19 715 714
- DE-B- 1 056 431
- FR-A- 1 462 454
- FR-A- 1 576 290
- GB-A- 2 224 068
- US-A- 4 402 483
- PATENT ABSTRACTS OF JAPAN vol. 013, no. 588 (M-912), 25. Dezember 1989 (1989-12-25) & JP 01 247633 A (HIDEYUKI TADA;OTHERS: 01), 3. Oktober 1989 (1989-10-03)
- PATENT ABSTRACTS OF JAPAN vol. 1997, no. 08, 29. August 1997 (1997-08-29) & JP 09 112068 A (TAKENAKA KOMUTEN CO LTD), 28. April 1997 (1997-04-28)
- PATENT ABSTRACTS OF JAPAN vol. 004, no. 072 (M-013), 27. Mai 1980 (1980-05-27) & JP 55 033939 A (TOSHIBA MACH CO LTD), 10. März 1980 (1980-03-10)

## Beschreibung

Die Erfindung betrifft eine Vorrichtung zur gedämpften Lagerung eines Objekts in einer schwingungs- und/oder stoßgefährdeten Umgebung mit einer in dieser Umgebung montierten Basis und einem damit über ein Dämpfungselement verbundenen Träger für das Objekt.

Unter dem Begriff Dämpfungselement ist hierbei u. a. jedes System mit einer Kombination von elastischen und dämpfenden Eigenschaften zu verstehen, unabhängig davon, ob es in einem einzelnen Bauteil oder in mehreren zusammenwirkenden Bauteilen besteht. Das heißt, ein solches Dämpfungselement weist in der Regel zum einen eine Rückstellkraft, welche das Dämpfungselement in eine Ruhelage zurück zwingt, und zum anderen eine Dämpfcharakteristik zur Verhinderung von Eigenschwingungen auf.

Ein wichtiges Einsatzgebiet derartiger Vorrichtungen ist die Lagerung von schwingungs- und stoßempfindlichen Geräten, insbesondere elektronischen oder feinmechanischen Geräten, beispielsweise Computer, Bildschirme oder Drucker in Wasser-, Luft- oder Landfahrzeugen, insbesondere geländegängigen Landfahrzeugen.

Unter extremen Bedingungen sind solche Fahrzeuge einem sehr breitbandigen Spektrum an Schwingungen und Stößen ausgesetzt. So können beispielsweise Stöße bis 40 g (g : Erdbeschleunigung) in einem Frequenzbereich von 20 bis 50 Hz auftreten. Darüber hinaus gibt es Schwingungen mit einer Belastung von bis zu 18 g im Bereich von 50 bis 200 Hz. Insbesondere bei kettengetriebenen Landfahrzeugen kommt ein typisches Kettenrauschen mit einer Frequenz von 200 bis 1000 Hz hinzu, welches die übrigen Schwingungen und Stöße überlagert. Sowohl die durch die Ketten bedingten Schwingungen als auch die übrigen Schwingungen und Stöße können in jede beliebige Raumrichtung erfolgen und sind nicht korreliert. Dies führt zwangsläufig dazu, daß zufällig Ablenkungsamplituden mit gleicher Richtung zusammentreffen, was in einer völlig unkontrollierten starken momentanen Amplitudenüberhöhung resultiert. Hierbei treten enorme Beschleunigungskräfte auf.

Aus der DE 44 19 890 C2 ist ein Bildschirmarbeitsplatz für mobile Fern- und Führungskabinen unter Verwendung einer Schwingungs- und Stoßdämpfung für die eingesetzten Arbeitsgeräte bekannt. Hierbei wird beispielsweise auf einem am Kabinenboden befestigten Gestell eine Arbeitsplatte in Führungen einschiebbar schwingungs- und stoßgedämpft befestigt, das heißt, die Tischplatte ist hier über entsprechende Dämpfungselemente mit dem Gestell als Basis verbunden.

Zur schwingungsgedämpften Lagerung gibt es inzwischen fertig konfektionierte Dämpfer. Als Hochleistungsdämpfer bieten sich beispielsweise bestimmte hydrodynamische Dämpfer an. Hierbei handelt es sich um Feder-Elastomer-Dämpfer mit hoher Eigendämpfung, die vollständig in einem Gehäuse eingeschlossen sind und einerseits an der Basis und andererseits an dem Träger befestigt werden. Die rückstellenden Eigenschaften erhalten sie durch nichtlineare Tellerfedern. Die Dämpfung erfolgt aufgrund von Silikonfett, das durch Membranen gepreßt wird. Diese Dämpfungselemente sind in der Lage, die "normalerweise" auftretenden Schwingungen in den genannten Frequenzbereichen relativ gut zu verkraften. Problematisch ist jedoch die hohe Belastung bei einer momentanen Amplitudenaddition. Solche schockartigen Amplitudenüberhöhungen führen im Extremfall zu einer Zerstörung, beispielsweise zu einem Abriß der Dämpfungselemente. Insbesondere ist bei den bekannten Dämpfungselementen die Scherbelastbarkeit relativ gering.

Eine ideale Lagerung, um solche schockartigen Amplitudenüberhöhungen zu überstehen, würde beispielsweise darin bestehen, das Objekt so gedämpft aufzuhängen, daß es relativ weit auslenken kann, um auf der langen Wegstrecke die Stoßenergie weitgehend zu absorbieren. Andererseits ist aber gerade bei dem gewünschten Einsatzzweck in Fahrzeugen der Platz in der Regel begrenzt, so daß nur geringe Auslenkungsamplituden zugelassen sind.

Aus der GB-A-2 224 068 ist der Oberbegriff des Anspruchs 1 bekannt.

Es ist daher Aufgabe der vorliegenden Erfindung, eine Vorrichtung anzugeben, die in der Lage ist, ein Objekt in einer derart extremen schwingungs- und/oder stoßgefährdeten Umgebung sicher gedämpft zu lagern und insbesondere auch größere momentane Kräfte sicher absorbiert, ohne dass die Vorrichtung oder das Objekt beschädigt bzw. zerstört werden.

Diese Aufgabe wird durch die Merkmale des Anspruchs 1 gelöst.

Durch den parallelen Stoßfänger wird bei einer Kraft, die dazu führen könnte, das Dämpfungselement zu zerreißen, ein Großteil dieser Kraft im Stoßfänger absorbiert und die Bewegung gedämpft. Diese Stoßdämpfer haben folglich die Funktion eines weichen Anschlags, der zum einen dafür sorgt, dass die maximale das Dämpfungselement zerstörende Auslenkung nicht überschritten wird, zum anderen aber auch, im Gegensatz zu einem harten Anschlag, dafür sorgt, dass die Stoßenergie nicht auf den Träger übertragen und so an das Objekt ungedämpft weitergeleitet wird.

Bei der Erfindung weist der Stoßfänger ein langgestrecktes Zugelement auf, welches aus elastischem Material besteht und welches zum einen an der Basis und zum anderen am Träger fixiert ist. Mit einem solchen elastischen Zugelement können gleichzeitig auf relativ einfache Weise die rückstellenden Eigenschaften und die dämpfenden Eigenschaften verwirklicht werden.

Als Zugelement sieht die Erfindung dabei einen O-Ring vor, wobei ein solcher O-Ring auf zumindest einem Ringabschnitt an der Basis und auf zumindest einem Ringabschnitt am Träger fixiert ist. Ein solcher O-Ring, beispielsweise aus Gummi oder Viton, hat hervorragende elastische Eigenschaften derart, daß er sich ab einer bestimmten Belastung unter Verjüngung seines Materialquerschnittes elastisch langzieht und somit für den hier genannten Einsatz als Stoßfänger eine ausgeprägt nichtlineare Kennlinie aufweist. Außerdem sind derartige O-Ringe in verschiedensten handelsüblichen Größen, das heißt mit den unterschiedlichsten Öffnungsquerschnitten und Materialquerschnitten, beschaffbar. Die Zugelemente müssen folglich nicht als Spezialanfertigung hergestellt werden.

Ein solcher an der Basis und am Träger eingespannter O-Ring bildet aufgrund seiner Form zwangsläufig gleich zwei nebeneinander wirkende Zugelemente. Der O-Ring wird hierbei vorzugsweise auf diametral gegenüberliegenden Seiten des O-Rings an der Basis und am Träger fixiert, wobei der O-Ring in der Ruhestellung zwischen der Basis und dem Träger bezüglich seines Öffnungsquerschnitts beliebig verformt angeordnet sein kann.

Vorzugsweise wird ein Stoßfänger benutzt, dessen Rückstellkraft nichtlinear, das heißt überproportional bzw. sogar stark überproportional ansteigt, z. B. kann die Federkonstante durch einen Wechsel der Art der Verformung im Laufe der Auslenkung stark ansteigen.

Bei einer bevorzugten Ausführungsform sind mehrere dieser Stoßfänger parallel zum Dämpfungselement so angeordnet, daß jede oberhalb des Schwellenwerts ansteigende geometrische Auslenkung zwischen der Basis und dem Träger unabhängig von ihrer Richtung von mindestens einem der Stoßfänger begrenzt wird. Insbesondere bei größeren Objekten ist es selbstverständlich auch sinnvoll, ebenso mehrere Dämpfungselemente parallel zu verwenden.

Um die Begrenzungswirkung in jeder Richtung zu gewährleisten, ist es bei derartigen Stoßfängern sinnvoll, daß die Zugelemente jeweils so an der Basis und am Träger fixiert sind, daß sie in einer' Ruhestellung im wesentlichen in verschiedene Richtungen schräg zwischen der Basis und dem Träger verlaufen. So können beispielsweise drei solcher Stoßfänger in einem Dreieck angeordnet sein und die Zugelemente laufen jeweils schräg nach außen. Eine ebenfalls günstige Alternative besteht darin, jeweils zwei Stoßfänger paarweise gegenüberliegend am Umfang einer ausgedehnten Basis bzw. eines ausgedehnten Trägers so anzuordnen, daß die Zugelemente eines sich gegenüberliegenden Paares jeweils schräg zueinander verlaufen. Entscheidend ist jeweils, daß jede linear unabhängige Orientierungsrichtung durch die auffangende Wirkung zumindest eines Zugelements abgedeckt ist.

Vorzugsweise ist der O-Ring an der Basis und am Träger auf jeweils unterschiedlichen langen Ringabschnitten fest eingespannt und so zwischen der Basis und dem Träger bezüglich seines Öffnungsquerschnittes verformt angeordnet, daß in der Ruhestellung die freien Ringabschnitte zwischen der Basis und dem Träger schräg voneinander weg verlaufen. Somit werden durch einen O-Ring bereits zwei linear unabhängige Raumrichtungen erfaßt.

Das Einspannen des O-Rings an der Basis und am Träger kann ebenfalls entgegen der Eigenform des O-Rings geschehen. Bei einer bevorzugten Ausführungsform ist der O-Ring jeweils in einem länglichen Block gerade eingespannt.

Bei einer weiteren bevorzugten Ausführungsform besteht die Basis im wesentlichen aus einer Basisplatte und der Träger aus einer Trägerplatte, die im wesentlichen parallel in einem zu ihren Seitenabmessungen relativ kurzen Abstand zueinander angeordnet sind. Das heißt, die gesamte Vorrichtung ist als eine flache modulare Montageplattform aufgebaut.

Weiterhin ist es von Vorteil, wenn der Träger im wesentlichen eine Wannenform aufweist, deren Grundfläche als Trägerplatte sich parallel zur Basisplatte erstreckt und deren umlaufende Seitenwände sich in Richtung der Basisplatte erstrecken. Hierbei bildet der Träger gleichzeitig eine Art deckelförmiges Gehäuse für die gesamte Vorrichtung, so daß die Dämpfungselemente und die Stoßfänger vor einem Eingriff von außen geschützt sind. Vor allem verhindert ein solcher umlaufender gehäuseförmiger Rand auch, daß Gegenstande zwischen die Trägerplatte und die Basisplatte gelangen und die dämpfende Wirkung außer Kraft setzen können. Selbstverständlich ist es auch möglich, daß die Basis in Form einer Wanne aufgebaut ist, in der die Trägerplatte eingelegt ist.

Um die Vorrichtung zu montieren, befindet sich vorzugsweise in der Grundfläche des wannenförmigen Trägers eine Aussparung als Montageöffnung.

Bei besonders schwingungsempfindlichen Geräten, beispielsweise Druckern oder anderen mechanisch arbeitenden Geräten, kann das jeweilige Objekt auch durch ein oder mehrere weitere Dämpfungselemente mit dem Träger gekoppelt sein, um die Restschwingungen, die über die Vorrichtung noch zum Träger gelangen, weiter zu dämpfen.

Eine Alternative hierzu besteht darin, mehrere dieser Vorrichtungen seriell hintereinander zu koppeln und somit ein System zur gedämpften Lagerung eines Objekts aufzubauen.

Die Erfindung wird im folgenden unter Hinweis auf die beigefügten Zeichnungen anhand eines Ausführungsbeispiels näher erläutert, wobei die in dem Ausführungsbeispiel dargestellten Merkmale auch einzeln oder in anderen Kombinationen miteinander erfindungswesentlich sein können. Es zeigen:

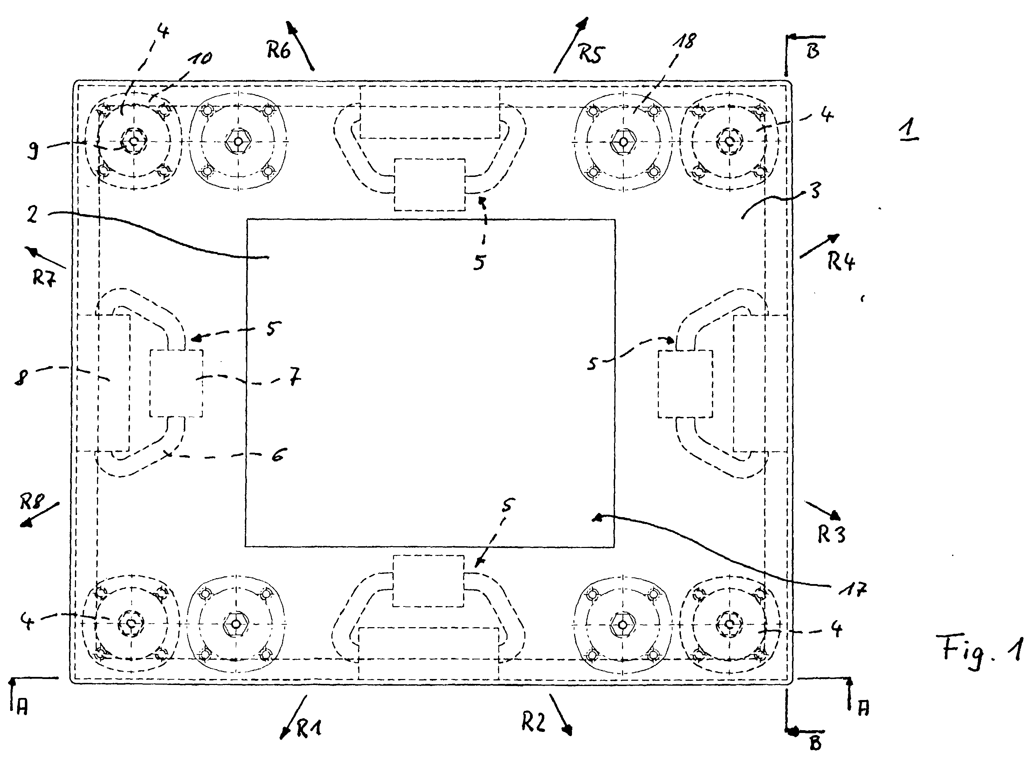

Figur 1 eine Draufsicht auf ein Ausführungsbeispiel der erfindungsgemäßen Vorrichtung;

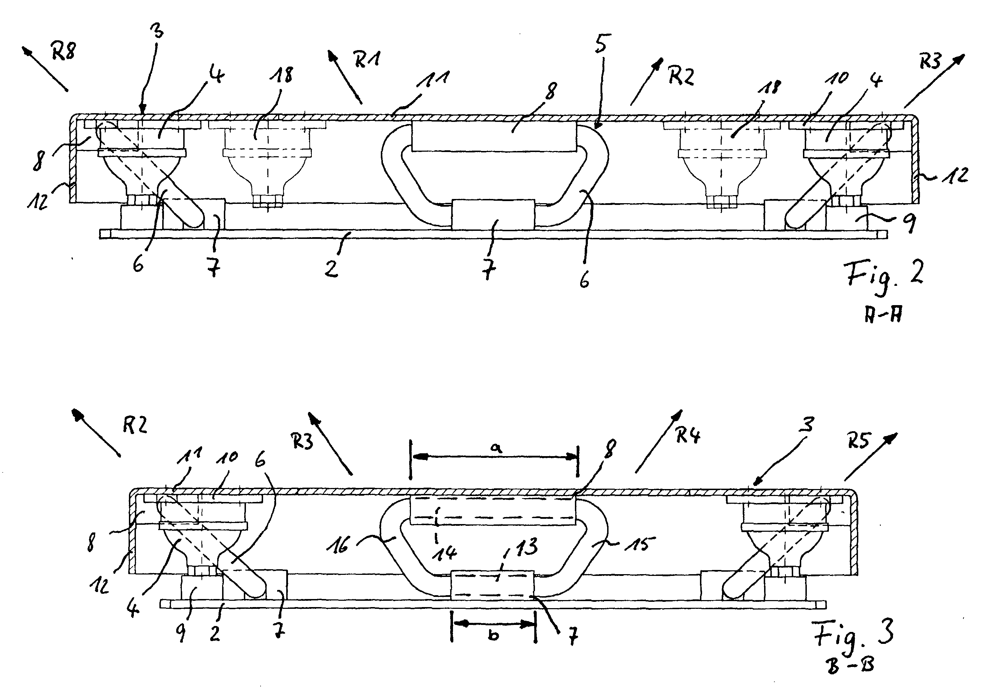

Figur 2 einen Schnitt durch die erfindungsgemäße Vorrichtung gemäß Figur 1 entlang der Schnittlinie A-A;
Figur 3 einen Schnitt durch die erfindungsgemäße Vorrichtung gemäß Figur 1 entlang der Schnittlinie B-B.

Die in den Figuren dargestellte erfindungsgemäße Vorrichtung weist eine vierekkige Basisplatte 2 auf, an der an allen vier Eckpunkten hydrodynamische Dämpfungselemente 4 montiert sind.

Bei diesen hydrodynamischen Hochleistungsschwingungsdämpfern 4 handelt es sich um Feder-Elastomer-Dämpfer mit besonders hoher Eigendämpfung. Bei einem speziellen Ausführungsbeispiel handelt es sich hierbei um Dämpfer der Firma Stop-choc, beispielsweise vom Typ E1FH781-S01 oder E1 FH781-C01. Diese Dämpfer 4 sind an ihrem Fußpunkt auf Sockelstücken 9 an der Basisplatte 2 befestigt.

Auf der gegenüberliegenden, oberen Seite weisen die Dämpfer 4 einen Flansch 10 auf, mit dem sie an der Grundfläche 11 eines wannenförmigen Trägers 3 befestigt sind, dessen umlaufende Seitenwände 12 sich nach unten in Richtung der Basisplatte 2 erstrecken. Die Basisplatte 2 bildet folglich gemeinsam mit dem wannenförmigen Träger 3 und den dazwischen montierten Dämpfungselementen 4 eine modulartige Montageplattform, wobei die Basis 2 in der Regel ortsfest in der schwingungs- und/oder stoßgefährdeten Umgebung montiert wird und der Träger 3 als Plattform für das gedämpft zu lagernde Objekt dient.

Bei dem vorliegenden speziellen Ausführungsbeispiel beträgt der Abstand zwischen der Oberkante der Basisplatte 2 und der Innenseite der Grundfläche 11 des wannenförmigen Trägers 3 ca. 56 mm. Die Grundmaße des wannenförmigen Trägers 3 sind ca. 430 mm x 370 mm. Die hydrodynamischen Dämpfer 4 weisen in ihrem oberen zylindrischen Bereich unterhalb des Flansches 10 einen Durchmesser von 43 mm auf.

An der Basisplatte 2 bzw. am Träger 3 befinden sich an verschiedensten Stellen Löcher oder Bolzen (nicht dargestellt) zur Montage der Basisplatte 2 in der Umgebung bzw. zur Montage des Objekts auf dem Träger 3. Weiterhin befindet sich in der Mitte der Grundfläche 11 des wannenförmigen Trägers 3 eine Montageöffnung 17, durch die von oben der Raum zwischen dem wannenförmigen Träger 3 und der Basisplatte 2 zugänglich ist.

An den vier Seitenkanten sind jeweils mittig, parallel zu den an den Ecken der Basisplatte 2 angeordneten Dämpfungselementen 4 wirkende Stoßfänger 5 angeordnet. Diese Stoßfänger bestehen jeweils aus einem O-Ring 6, der in länglichen, parallel laufenden Spannblöcken 7, 8 einerseits an der Basisplatte 2 und andererseits an der Grundfläche 11 des wannenförmigen Trägers 3 fest eingespannt ist. Hierbei ist der O-Ring in den Montageblöcken 7, 8 jeweils auf einem Ringabschnitt 13, 14 entgegen seiner Eigenform gerade eingespannt.

Die Montageblöcke 7 an der Basisplatte 2 sind gegenüber den Montageblöcken 8 am Träger 3 jeweils nach innen versetzt angeordnet. Dies führt dazu, daß die freien Ringabschnitte 15, 16 des O-Rings 6 jeweils schräg nach außen verlaufen.

Weiterhin ist die Länge b des an der Basisplatte 2 befindlichen Montageblocks 7 geringer als die Länge a des an der Grundfläche 11 des Trägers 3 befindlichen Montageblocks 8. In dem genannten konkreten Ausführungsbeispiel beträgt beispielsweise die Länge b des Montageblocks 7 an der Basis 40 mm, die Länge a des Montageblocks 8 am Träger 80 mm. Aufgrund dieser unterschiedlichen Einspannlängen a, b verlaufen die freien Ringabschnitte 15, 16 zwischen der Basis und dem Träger schräg voneinander weg nach außen entlang der Richtung R1, R2. Insgesamt haben die vier O-Ringe 6 daher die Wirkung von 8 verschiedenen Zugelementen, die jeweils in unterschiedliche Richtungen R1 bis R8 entlang des Umfangs der Basisplatte 2 bzw. des Trägers 3 nach außen verlaufen, so daß jede geometrische Auslenkung zwischen der Basis 2 und dem Träger 3 unabhängig von ihrer Richtung von mindestens einem der Stoßfänger 5 begrenzt wird.

Bei einer größeren Auslenkung des Abstands zwischen der Grundfläche 11 des Trägers 3 und der Basisplatte 2 im Bereich eines der Stoßfänger 5 wird dies dazu führen, daß die freien Abschnitte 15, 16 des jeweiligen O-Rings 6 zunächst aus der dargestellten trapezförmigen Form in der Ruhelage weiter langgestreckt werden, im Bereich der Ränder der Montageblöcke 7, 8 mit immer kleineren Krümmungsradien gebogen bzw. geknickt werden, wobei die Federkonstante bereits ansteigt, und anschließend unter Verjüngung des Materialquerschnittes langgezogen werden. Hierdurch wird mit zunehmender Auslenkung eine überproportional zunehmende Rückstellkraft ausgeübt, die der Stoßkraft entgegenwirkt. Da zunächst eine Formveränderung der freien Abschnitte 15, 16 des O-Rings 6 aus der gekrümmten Form in eine langgestreckte Form und dann erst die Verjüngung des Materialquerschnittes erfolgt, ist ein weicher Übergang der Begrenzungswirkung gewährleistet.

Insgesamt bilden die O-Ringe 6 folglich einen sehr weich einsetzenden Anschlag, der sicher dafür sorgt, daß die Auslenkung bis auf einen für die Dämpfungselemente 4 zulässigen Maximalwert begrenzt wird. Die Stoßfänger 5 können dabei auch größte momentane Belastungen aufnehmen, wie sie beispielsweise bei einer unkontrollierten Überlagerung von verschiedenen Schwingungen und Stößen auftreten, ohne daß es zu einer Zerstörung der Dämpfungselemente 4 kommt. Insgesamt ist die erfindungsgemäße Vorrichtung 1 daher in der Lage, Schwingungen und Stöße in einem außerordentlich breiten Frequenzbereich und bei sehr hohen Belastungen zu verarbeiten.

Die Vorrichtung 1 hat zudem den Vorteil, daß sie flexibel zur Lagerung verschiedener Objekte einsetzbar ist. Eine Einstellung auf das jeweilige Gewicht des Objekts ist durch die Anzahl der Dämpfungselemente 4 und die Vorspannung der O-Ringe 6 bzw. gegebenenfalls durch einen einfachen Austausch der O-Ringe gegen O-Ringe mit anderen geometrischen Abmessungen möglich.

In dem genannten konkreten Ausführungsbeispiel werden O-Ringe 6 mit einem Öffnungsquerschnitt von ca. 70 mm und einem Materialquerschnitt von ca. 12 mm eingesetzt. Zusammen mit vier Dämpfern des Typs E1FH781-C01 der Firma Stop-choc ist die Vorrichtung in der Lage, Objekte mit einem Gewicht zwischen 15 und 22 kg sicher stoß- und schwingungsgedämpft zu lagern. Um Gewichte zwischen 20 und 30 kg zu lagern, sind an der Grundfläche 11 des wannenförmigen Trägers 3, direkt neben den Dämpfungselementen 4, zusätzliche optionale Dämpfungselemente 18 des gleichen Typs angeordnet. Diese müssen lediglich über weitere Sockelstücke 9 mit der Basisplatte verbunden werden, so daß der Träger dann über acht Dämpfungselemente 4, 18 mit der Basisplatte 2 gekoppelt ist. Außerdem wird die Vorspannung an den O-Ringen 6 erhöht, indem z. B. längere Einspannblöcke 7, 8 verwendet werden und somit die freien Abschnitte 15, 16 der O-Ringe 6 verkürzt werden.

Die erfindungsgemäße Vorrichtung wurde unter den Bedingungen eines Betriebs in ungefederten Kettenfahrzeugen mit der Norm MIL 810E-514.4-1, Kath. 8, Verf. I-3.4.7, crew compartement walls, Tab A XIX, getestet und hat hier ausgezeichnete Ergebnisse erzielt. Bei diesem Test werden, wie unter den realen Bedingungen, Schwingungsfrequenzen zwischen 200 und 1000 Hz mit Schwingungen zwischen 50 und 200 Hz sowie Stößen zwischen 20 und 50 Hz überlagert. Die Stöße haben dabei eine Belastung von bis zu 40 g, die Schwingung eine Belastung bis 18 g. Auf dem Träger 3 wurde außerdem über zusätzliche Dämpfungselemente desselben Typs, wie sie auch zwischen Träger und Basis verwendet werden, ein handelsüblicher Tintenstrahldrucker montiert. Dieser Tintenstrahldrucker war während des gesamten Tests voll betriebsfähig. Die während des Testbetriebs erzeugten Ausdrucke wiesen die gleiche Qualität auf, wie vor und nach dem Test erzeugte Ausdrucke.

## Patentansprüche

1. Vorrichtung zur gedämpften Lagerung eines Objekts in einer schwingungsund/oder stoßgefährdeten Umgebung, mit einer in dieser Umgebung montierten Basis (2), einem damit über ein Dämpfungselement (4) verbundenen Träger (3) für das Objekt und einem parallel zum Dämpfungselement (4) auf Zug wirkenden Stoßfänger (5), welcher bei einer ansteigenden geometrischen Auslenkung zumindest eines Teilbereichs des Trägers (3) gegenüber der Basis (2) zumindest ab einem Schwellenwert der Auslenkung elastisch verformt wird und zur Begrenzung der Auslenkung eine ansteigende Rückstellkraft ausübt,
**dadurch gekennzeichnet, dass** der Stoßfänger (5) ein langgestrecktes Zugelement (6) aus elastischem Material, etwa Gummi oder Viton, aufweist, nämlich einen O-Ring (6), welcher mit zumindest einem Ringabschnitt (13) an der Basis (2) und mit zumindest einem weiteren Ringabschnitt (14) am Träger (3) fixiert ist.

2. Vorrichtung nach Anspruch 1, **dadurch gekennzeichnet, dass** die Rückstellkraft nichtlinear ansteigt.

3. Vorrichtung nach Anspruch 1 oder 2, **gekennzeichnet durch** mehrere parallel angeordnete Stoßfänger (5), welche so angeordnet sind, dass jede oberhalb des Schwellenwerts ansteigende geometrische Auslenkung zwischen der Basis (2) und dem Träger (3) unabhängig von ihrer Richtung von mindestens einem der Stoßfänger (5) begrenzt wird.

4. Vorrichtung nach einem der vorstehenden Ansprüche, **gekennzeichnet durch** eine Mehrzahl an verschiedenen Stellen zwischen der Basis (2) und dem Träger (3) angeordneten Stoßfänger (5), deren Zugelemente (6) jeweils so an der Basis (2) und am Träger (3) fixiert sind, dass sie in einer Ruhestellung im wesentlichen in verschiedene Richtungen (R1 bis R8) schräg zwischen der Basis (2) und dem Träger (3) verlaufen.

5. Vorrichtung nach einem der vorstehenden Ansprüche, **dadurch gekennzeichnet, dass** der O-Ring (6) auf diametral gegenüberliegenden Seiten des O-Rings an der Basis (2) und am Träger (3) fixiert ist.

6. Vorrichtung nach einem der vorstehenden Ansprüche, **dadurch gekennzeichnet, dass** der O-Ring (6) in der Ruhestellung zwischen der Basis (2) und dem Träger (3) bezüglich seines Öffnungsquerschnitts verformt angeordnet ist.

7. Vorrichtung nach Anspruch 6, **dadurch gekennzeichnet, dass** der O-Ring (6) an der Basis (2) und am Träger (3) auf einem unterschiedlich langen Ringabschnitt fest eingespannt ist und so zwischen der Basis (2) und dem Träger (3) bezüglich seines Öffnungsquerschnitts verformt angeordnet ist, dass in der Ruhestellung die freien Ringabschnitte (15, 16) zwischen der Basis (2) und dem Träger (3) schräg voneinander weg verlaufen.

8. Vorrichtung nach einem der vorstehenden Ansprüche, **dadurch gekennzeichnet, dass** das Dämpfungselement (4) einen hydrodynamischen Dämpfer (4) aufweist.

9. Vorrichtung nach einem der vorstehenden Ansprüche, **dadurch gekennzeichnet, dass** der Träger (3) auf der Basis (2) auf mehreren Dämpfungselementen (4) gelagert ist und jeweils zwischen zwei benachbarten Dämpfungselementen (4) ein Stoßfänger (5) angeordnet ist.

10. Vorrichtung nach einem der vorstehenden Ansprüche, **gekennzeichnet durch** eine weitere Dämpfungseinrichtung, über welche das Objekt mit dem Träger gekoppelt ist.

11. Vorrichtung nach einem der vorstehenden Ansprüche, **dadurch gekennzeichnet, dass** die Basis (2) eine Basisplatte (2) und der Träger (3) eine Trägerplatte (11) umfasst, die im Wesentlichen parallel in einem relativ zu ihren Seitenabmessungen kurzen Abstand zueinander angeordnet sind,

12. Vorrichtung nach Anspruch 11, **dadurch gekennzeichnet, dass** der Träger (3) im Wesentlichen eine Wannenform aufweist, deren Grundfläche (11) als Trägerplatte (11) sich parallel zur Basisplatte (2) erstreckt und deren umlaufende Seitenwände (12) sich in Richtung der Basisplatte (2) erstrecken.

13. Vorrichtung nach Anspruch 12, **dadurch gekennzeichnet, dass** die Grundfläche (11) des wannenförmigen Trägers (3) eine Aussparung (17) als Montageöffnung aufweist.

14. Vorrichtung nach einem der vorstehenden Ansprüche, **gekennzeichnet durch** ein an der Basis (2) oder dem Träger (3) angebrachtes Dämpfungselement (18), das mit dem Träger (3) bzw. der Basis (2) zur Anpassung der Dämpfungseigenschaften an ein Objekt mit höherer Masse verbindbar ist.

15. Vorrichtung nach einem der vorstehenden Ansprüche, **gekennzeichnet durch** einen an der Basis (2) oder dem Träger (3) angebrachten Stoßfänger, der mit dem Träger (3) bzw. der Basis (2) zur Anpassung der Dämpfungseigenschaften an ein Objekt mit höherer Masse verbindbar ist.

16. Verfahren zur gedämpften Lagerung eines Objekts unter Verwendung einer Vorrichtung nach einem der vorstehenden Ansprüche, bei dem die Dämpfungseigenschaften der Vorrichtung an die Masse des Objekts angepasst werden, indem mit zunehmender Masse des Objekts die Vorspannung des Stoßfängers erhöht wird.

17. Verfahren gemäß Anspruch 16, **dadurch gekennzeichnet, dass** durch entsprechende Einspannung des O-Rings (6) an der Basis (2) oder am Träger (3) die Länge der freien Abschnitte (15, 16) verändert wird.

18. System zur gedämpften Lagerung eines Objekts in einer schwingungsundloder stoßgefährdeten Umgebung mit einer Mehrzahl von seriell hintereinander gekoppelten Vorrichtungen (1) gemäß einem der Ansprüche 1 bis 15.

## Claims

1. Device for damped mounting of an object in an environment at risk from vibration and/or impact, having a base (2) mounted in this environment, an object support (3) connected with the base by way of a damping element (4) and a shock absorber (5) acting parallel to the damping element (4) in response to tension, which shock absorber is resiliently deformed upon increasing geometrical displacement of at least a partial region of the support (3) with respect to the base (2), at least from a threshold value of the displacement, and exerts an increasing restoring force in order to limit the displacement,
**characterised in that** the shock absorber (5) comprises an elongate tension element (6) of resilient material, for instance rubber or Viton, namely an O-ring (6), which is fixed with at least one ring portion (13) to the base (2) and with at least one further ring portion (14) to the support (3).

2. Device according to claim 1, **characterised in that** the restoring force increases non-linearly.

3. Device according to claim 1 or 2, **characterised by** several shock-absorbers (5) arranged in parallel, these being so arranged that every geometric displacement between the base (2) and the support (3) exceeding the threshold value is limited, irrespective of its direction, by at least one of the shock absorbers (5).

4. Device according to any one of the preceding claims, **characterised by** a plurality of shock absorbers (5) arranged at different points between the base (2) and the support (3), the tension elements (6) of which shock absorbers are each fixed to the base (2) and to the support (3) so that in a position of rest they extend substantially in different directions (R1 to R8) obliquely between the base (2) and the support (3).

5. Device according to any one of the preceding claims, **characterised in that** the O-ring (6) is fixed on diametrically opposite sides of the O-ring to the base (2) and to the support (3).

6. Device according to any one of the preceding claims, **characterised in that**, in the position of rest, the O-ring (6) is arranged between the base (2) and the support (3) with its opening cross-section deformed.

7. Device according to claim 6, **characterised in that** the O-ring is fixedly clamped to the base (2) and to the support (3) at a ring portion of different length, and is arranged between the base (2) and the support (3) with its opening cross-section deformed in such a way that in the position of rest the free ring portions (15, 16) between the base (2) and the support (3) extend obliquely away from one another.

8. Device according to any one of the preceding claims, **characterised in that** the damping element (4) comprises a hydrodynamic damper (4).

9. Device according to any one of the preceding claims, **characterised in that** the support (3) is mounted on a plurality of damping elements (4) on the base (2) and a shock absorber (5) is arranged between every two adjacent damping elements (4).

10. Device according to any one of the preceding claims, **characterised by** a further damping device, by means of which the object is coupled to the support.

11. Device according to any one of the preceding claims, **characterised in that** the base (2) includes a base plate (2) and the support (3) includes a support plate (11) which are arranged substantially parallel a short distance apart from one another relative to their lateral dimensions.

12. Device according to claim 11, **characterised in that** the support (3) is substantially in the form of a tray, the base surface (11) of which extends as support plate (11) parallel to the base plate (2) and the circumferential lateral walls (12) of which extend towards the base plate (2).

13. Device according to claim 12, **characterised in that** the base surface (11) of the tray-form support (3) has an aperture (17) as mounting opening.

14. Device according to any one of the preceding claims, **characterised by** a damping element (18) disposed on the base (2) or the support (3), which damping element is connectible with the support (3) respectively the base (2) for adaptation of the damping properties to an object of greater mass.

15. Device according to any one of the preceding claims, **characterised by** a shock absorber disposed on the base (2) or the support (3), which shock absorber is connectible with the support (3) respectively the base (2) for adaptation of the damping properties to an object of greater mass.

16. Method for damped mounting of an object using a device according to any one of the preceding claims, in which the damping properties of the device are adapted to the mass of the object by increasing the pre-tension of the shock absorber as the mass of the object increases.

17. Method according to claim 16, **characterised in that** the length of the free portion (15,16) is altered by corresponding clamping of the O-ring (6) to the base (2) or to the support (3).

18. System for damped mounting of an object in an environment at risk from vibration and/or impact, having a plurality of devices (1) according to any one of claims 1 to 15 coupled in series one behind the other.

## Revendications

1. Dispositif pour le logement amorti d'un objet dans un environnement soumis à des vibrations et/ou à des chocs, avec une base (2) montée dans cet environnement, un support (3), pour l'objet, relié à la base par le biais d'un élément amortisseur (4) et un dispositif d'amortissement des chocs (5) agissant sur la traction, parallèle à l'élément amortisseur (4), qui, lors d'une déformation géométrique ascendante d'au moins une sous-zone du support (3) par rapport à la base (2), est déformé de manière élastique au moins à partir d'une valeur seuil de la déformation, et exerce une force de rappel ascendante pour limiter la déformation, **caractérisé en ce que** le dispositif d'amortissement des chocs (5) comprend un élément de traction étendu (6) fabriqué dans un matériau élastique, par exemple, du caoutchouc ou du viton, à savoir un joint torique (6), lequel est fixé à la base (2) par au moins un segment d'anneau (13) et au support (3) par au moins un autre segment d'anneau (14).

2. Dispositif selon la revendication 1, **caractérisé en ce que** la force de rappel s'élève de manière non linéaire.

3. Dispositif selon la revendication 1 ou 2, **caractérisé par** plusieurs dispositifs d'amortissement des chocs (5) disposés en parallèle, lesquels sont placés de telle sorte que toute déformation géométrique, entre la base (2) et le support (3), dépassant la valeur seuil soit limitée au moins par l'un des dispositifs d'amortissement des chocs (5), indépendamment de la direction de la déformation.

4. Dispositif selon l'une des revendications précédentes, **caractérisé par** une multitude de dispositifs d'amortissement des chocs (5) disposés à différents emplacements entre la base (2) et le support (3), dont les éléments de traction (6) sont respectivement fixés à la base (2) et au support (3) de telle sorte qu'ils s'étendent, dans une position de repos, pour l'essentiel dans différentes directions (R1 à R8), de manière oblique entre la base (2) et le support (3).

5. Dispositif selon l'une des revendications précédentes, **caractérisé en ce que** le joint torique (6) est fixé, sur des côtés diamétralement opposés du joint torique, à la base (2) et au support (3).

6. Dispositif selon l'une des revendications précédentes, **caractérisé en ce que** le joint torique (6) est disposé, en positon de repos, entre la base (2) et le support (3) de manière déformée par rapport à sa section d'ouverture.

7. Dispositif selon la revendication 6, **caractérisé en ce que** le joint torique (6) est solidement serré à la base (2) et au support (3) sur un segment d'anneau d'une longueur variable et disposé entre la base (2) et le support (3) de manière déformée par rapport à sa section d'ouverture, de telle sorte que, en position de repos, les segments d'anneau libres (15, 16) s'étendent loin l'un de l'autre, en diagonal, entre la base (2) et le support (3).

8. Dispositif selon l'une des revendications précédentes, **caractérisé en ce que** l'élément amortisseur (4) comporte un amortisseur hydrodynamique (4).

9. Dispositif selon l'une des revendications précédentes, **caractérisé en ce que** le support (3) est logé sur la base (2), sur plusieurs éléments amortisseurs (4) et qu'un dispositif d'amortissement des chocs (5) est disposé respectivement entre deux éléments amortisseurs (4) contigus.

10. Dispositif selon l'une des revendications précédentes, **caractérisé par** un autre dispositif d'amortissement par le biais duquel l'objet est relié au support.

11. Dispositif selon l'une des revendications précédentes, **caractérisé en ce que** la base (2) comprend une plaque de base (2) et le support (3) une plaque de support (11) qui sont disposées l'une par rapport à l'autre de manière essentiellement parallèle, à une courte distance relativement à leurs dimensions latérales.

12. Dispositif selon la revendication 11, **caractérisé en ce que** le support (3) présente pour l'essentiel une forme de cuvette dont la surface de base (11) s'étend en tant que plaque de support (11) parallèlement à la plaque de base (2) et dont les parois latérales environnantes (12) s'étendent en direction de la plaque de base (2).

13. Dispositif selon la revendication 12, **caractérisé en ce que** la surface de base (11) du support en forme de cuvette (3) comporte un évidement (17) en tant qu'orifice de montage.

14. Dispositif selon l'une des revendications précédentes, **caractérisé par** un élément amortisseur (18), monté sur la base (2) ou sur le support (3), qui peut être relié au support (3) ou à la base (2) afin d'adapter les propriétés d'amortissement à un objet avec une masse plus élevée.

15. Dispositif selon l'une des revendications précédentes, **caractérisé par** un dispositif d'amortissement des chocs, monté sur la base (2) ou sur le support (3), qui peut être relié au support (3) ou à la base (2) afin d'adapter les propriétés d'amortissement à un objet avec une masse plus élevée.

16. Procédé pour le logement amorti d'un objet avec utilisation d'un dispositif selon l'une des revendications précédentes, dans lequel les propriétés d'amortissement du dispositif sont adaptées à la masse de l'objet, en ceci que la précontrainte du dispositif d'amortissement des chocs est augmentée conformément à la masse de l'objet.

17. Dispositif selon la revendication 16, **caractérisé par le fait que** la longueur des segments libres (15, 16) soit modulée par le serrage adapté du joint torique (6) sur la base (2) ou le support (3).

18. Système pour le logement amorti d'un objet dans un environnement soumis à des vibrations et/ou à des chocs, avec une multitude de dispositifs (1) couplés l'un derrière l'autre en série selon l'une des revendications 1 à 15.
